# EUROPÄISCHE PATENTANMELDUNG

(11) **EP 1 964 676 A2**
(43) Veröffentlichungstag der Anmeldung: **03.09.2008**
(21) Anmeldenummer: 08002413.6
(22) Anmeldetag: 09.02.2008
(51) Int. Cl.: B41F 13/004, B41F 33/02, B41F 33/04

(54) **Anordnung einer Drehwinkelmesseinrichtung für einen antreibbaren Zylinder in einer Verarbeitungsmaschine und Verfahren für Drehwinkelmessung**

(30) Priorität: 28.02.2007 DE 102007010216
(71) Anmelder: manroland AG, 63075 Offenbach (DE)
(72) Erfinder: Gensheimer, Valentin, Dipl.-Ing., 63165 Mülheim am Main (DE)
(74) Vertreter: Stahl, Dietmar

(57) **Zusammenfassung**

Die Erfindung betrifft eine Anordnung einer Drehwinkelmesseinrichtung für einen antreibbaren Zylinder in einer Verarbeitungsmaschine. Der Erfindung liegt die Aufgabe zu Grunde, ein Verfahren und eine Anordnung der eingangs beschriebenen Art derart weiterzubilden, dass auf die Drehwinkelmesseinrichtung einwirkende, störende Einflüsse zumindest spürbar reduziert sind und die Signalerfassung der Drehwinkelmesseinrichtung mit einer höheren Genauigkeit erfolgt. Gelöst wird dies dadurch, indem zumindest ein Zylinder 1; 2 eine daran fixiert angeordnete Maßverkörperung 12 umfasst und dass der Maßverkörperung 12 eine die Drehwinkellage induktiv erfassende Abtasteinrichtung 13 berührungslos zugeordnet ist.

## Beschreibung

Anordnung einer Drehwinkelmesseinrichtung für einen antreibbaren Zylinder in einer Verarbeitungsmaschine und Verfahren zur Drehwinkelmessung.

Die Erfindung betrifft eine Anordnung einer Drehwinkelmesseinrichtung für einen antreibbaren Zylinder in einer Verarbeitungsmaschine und ein Verfahren zur Drehwinkelmessung nach den Oberbegriffen von Anspruch 1 und 2. Die Einrichtung eignet sich insbesondere für eine Offsetdruckmaschine mit oder ohne Lackwerken bzw. eine Lackiermaschine bei denen jeweils zumindest ein Zylinder mit einem Einzelantrieb antreibbar ist.

Eine Anordnung dieser Art ist aus EP 0 693374 A1 bekannt. Beschrieben ist dort ein elektrisches Antriebssystem für wenigstens einen Druckmaschinenzylinder mit einer Drehwinkelmesseinrichtung, hier als Winkellagegeber bezeichnet. Die Drehwinkelmesseinrichtung ist schaltungstechnisch mit einer Signalverarbeitungseinheit zur Istwertaufnahme der Winkelsignale und zur Sollwertaufnahme sowie zu deren Soll-Ist-Vergleich gekoppelt. Weiterhin dient die Signalverarbeitungseinheit der Ansteuerung eines Einzelantriebs.

Eine weitere Einrichtung ist aus DE 199 04 471 A1, hier als Drehgeber bezeichnet, bekannt, deren Drehgeber-Gehäuse mit einer elastischen Halterung an einer Rotationsdruckmaschine fixiert ist. Zentrisch im Drehgeber-Gehäuse befindet sich ein drehfester Stator, dem ein als Hohlwelle ausgebildeter Rotor zugeordnet ist. Der Drehgeber wird vorzugsweise mit seiner Hohlwelle auf die antreibbare Zylinderwelle aufgesteckt und mittels einer Klemmeinrichtung befestigt.

Weiterhin ist aus EP 0 812 683 A1 ein Lagegeber bekannt. Vom vorzugsweise für den Transport des Bogenmaterials vorgesehenen Räderzug einer Bogenoffsetdruckmaschine entkoppelt ist ein Plattenzylinder zumindest eines Offsetdruckwerkes mittels Einzelantrieb (Direktantrieb) in vorgebbarer Weise antreibbar.

In einer Weiterbildung ist der Plattenzylinder oder sind der Plattenzylinder und der Gummituchzylinder zur Durchführung von Umfangsregisterkorrekturen gegenüber den übrigen Zylindern antreibbar. In einer weiteren Ausbildung sind der Plattenzylinder und/oder der Gummituchzylinder zur Durchführung von Drucklängenkorrekturen gegenüber den übrigen Zylindern antreibbar. Jedem Gummituchzylinder ist ein Lagegeber zugeordnet, vermittels dessen Signale der Direktantrieb des jeweiligen Plattenzylinders auf synchronen Winkellauf mit dem jeweils zugeordneten Gummituchzylinder steuerbar ist.

Die genannten Einrichtungen basieren auf optisch inkrementalen Drehgebern, die zur Messung der Zylinderrotationsbewegung an den Drehachsen der jeweiligen Zylinder angekoppelt sind. Die Erfassung der Rotationsbewegung erfolgt durch eine im Gebergehäuse drehbar gelagerte und optisch abtastbare Strichscheibe. Das Gebergehäuse ist bevorzugt mittels einer elastischen Statorkupplung und einer Verdrehsicherung am Maschinengestell angelenkt. Derartige Ausführungen sind in ihren Messgenauigkeiten begrenzt, aufwändig zu justieren sowie schlag-, stoß- und schmutzempfindlich.

Der Erfindung liegt die Aufgabe zu Grunde, ein Verfahren und eine Anordnung der eingangs beschriebenen Art derart weiterzubilden, dass auf die Drehwinkelmesseinrichtung einwirkende, störende Einflüsse zumindest spürbar reduziert sind und die Signalerfassung der Drehwinkelmesseinrichtung mit einer höheren Genauigkeit erfolgt.

Gelöst wird die Aufgabe durch die Ausbildungsmerkmale von Anspruch 1. Weiterbildungen ergeben sich aus den abhängigen Ansprüchen.

Ein erster Vorteil ist darin begründet, dass eine erfindungsgemäß ausgebildete Drehwinkelmesseinrichtung für jeweils einen antreibbaren Zylinder einer Verarbeitungsmaschine mit unveränderbarer als auch mit veränderbarer Achsposition geeignet ist. Beispielsweise kann einem Gummituchzylinder (Zylinder mit veränderbarer Achsposition) eines Offsetdruckwerkes und/oder einem zugeordneten Platten-/Formzylinder (Zylinder mit fester Achsposition) des Offsetdruckwerks jeweils eine derartige Drehwinkelmesseinrichtung zugeordnet sein. Bevorzugt ist dabei der Zylinder mit unveränderbarer Achsposition, beispielsweise der Platten-/Formzylinder, mit einem Direktantrieb (Einzelantrieb) lagegeregelt antreibbar und der Zylinder mit veränderbarer Achsposition, beispielsweise der Gummituchzylinder, ist mittels eines Hauptantriebes (Räderzug mit wenigstens einem ein Antriebsmoment einspeisenden Motor) antreibbar. Mittels der Anordnung zumindest einer erfindungsgemäßen Drehwinkelmesseinrichtung ist ein verbesserter synchroner Winkellauf, insbesondere bei einem mit einem Einzelantrieb gekoppelten Zylinder, zwischen zwei derartigen Zylindern erzielbar.

Als zweiter Vorteil ist aufzuführen, dass die eine Drehwinkelerfassung störenden Einflüsse bei der Drehwinkelmesseinrichtung spürbar reduziert sind und dass die Signalerfassung mit höherer Genauigkeit erfolgt. Dazu tragen u.a. die verringerte Teileanzahl der Einrichtung, der reduzierte Justageaufwand sowie das induktive Arbeitsprinzip bei. Durch die relativ robuste Anordnung ist die Einrichtung unempfindlich gegen Erschütterungen bzw. Stöße. Weitere auf die Drehwinkelmesseinrichtung störend wirkende Einflüsse, beispielsweise Schwingungen oder Taumelbewegungen, sind spürbar reduziert bzw. eliminiert. Insgesamt ist eine prozessstabile Drehwinkelerfassung mit höheren Genauigkeiten realisierbar.

Ein dritter Vorteil ist darin begründet, dass bei einer Synchronisierung eines mit einem Einzelantrieb gekoppelten Zylinders mit fester Achsposition und eines zweiten Zylinders mit veränderbarer Achsposition, der über einen Hauptantrieb mit Räderzug antreibbar ist, jedem der Zylinder eine der erfindungsgemäß ausgebildeten Drehwinkelmesseinrichtungen zugeordnet ist. Dabei wird die Achse des mit dem Hauptantrieb und Räderzug gekoppelten ersten Zylinders, beispielsweise der Gummituchzylinder eines Offsetdruckwerkes, als Leitachse definiert. Der Istwert des Leitachsen-Drehwinkels (des ersten Zylinders) stellt den Sollwert für den zweiten Zylinder, beispielsweise der Platten-/Formzylinder des Offsetdruckwerkes, dar.

Die Signale werden einer vorzugsweise zentralen Steuerung, beispielsweise einer Maschinensteuerung, zugeführt, dort verarbeitet und der jeweilige Einzelantrieb des mit diesem gekoppelten Zylinders wird dementsprechend angesteuert, so dass unabhängig von der Zylinderposition der gewünschte, vorzugsweise synchrone, Winkellauf zwischen beiden Zylindern gewährleistet ist. Alternativ kann von dieser zentralen Steuerung ebenso der Hauptantrieb angesteuert werden.

Als vierter Vorteil kann angegeben werden, dass eine derartige Drehwinkelmesseinrichtung ortsfest oder nachführbar zum jeweiligen Zylinder angeordnet sein kann. Bei einem Zylinder mit unveränderbarer Achsposition ist die Drehwinkelmesseinrichtung ortsfest angeordnet. Bei einem Zylinder mit veränderbarer Achsposition kann die Drehwinkelmesseinrichtung ortsfest oder - der Verlagerungsbewegung des jeweiligen Zylinders folgend - nachführbar angeordnet sein. Weiterhin kann in vorteilhafter Weise die Drehwinkelmesseinrichtung Umfangs- und/oder Seitenregisterverstellungen erfassen.

Die Erfindung soll an einem Ausführungsbeispiel näher erläutert werden. Dabei zeigen schematisch:
- Fig. 1: ein Offsetdruckwerk,
- Fig. 2: einen antreibbaren Zylinder mit einer Drehwinkelmesseinrichtung,
- Fig. 3: die Drehwinkelmesseinrichtung in Seitenansicht,
- Fig. 4: die Drehwinkelmesseinrichtung in Draufsicht.

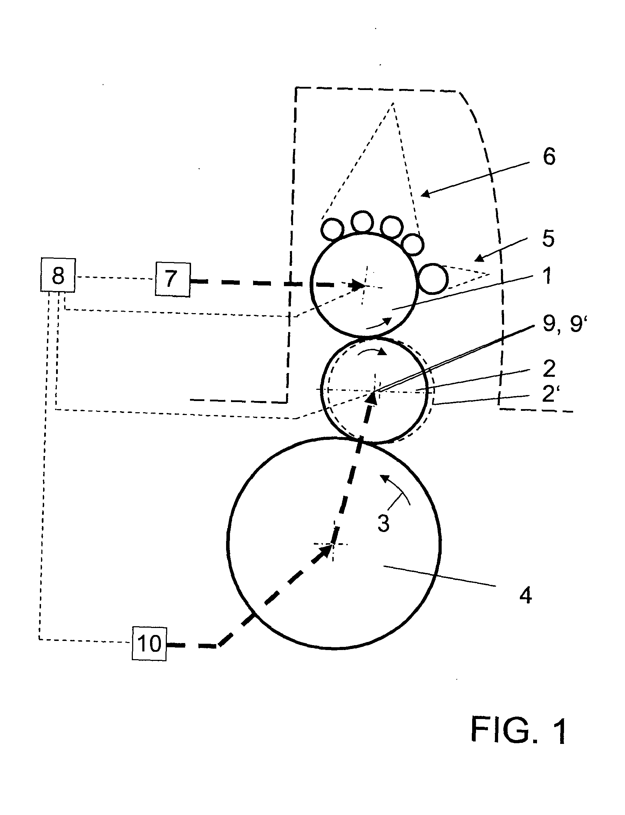

Gemäß Fig. 1 ist ein an sich bekanntes Offsetdruckwerk gezeigt, welches einen ersten Zylinder 1, hier einen Platten-/Formzylinder 1, einen zweiten Zylinder 2, hier einen Gummituchzylinder 2, sowie den Bedruckstoff in Förderrichtung 3 führenden Zylinder 4, hier als Druckzylinder 4 (Bogenführungszylinder) ausgebildet, aufweist. Das Offsetdruckwerk umfasst ferner ein Farbwerk 6 und bei Bedarf ein Feuchtwerk 5. In dieser Ausbildung ist der Platten-/Formzylinder 1 als Zylinder 1 mit fester (unveränderbarer) Achsposition und der Gummituchzylinder 2, 2' als Zylinder 2, 2' mit lageveränderbarer Achsposition, insbesondere zur Druck an- / Druck ab- Stellung, zur Bedruckstoffstärkeneinstellung bzw. Radialverstellung, zum Druckzylinder 4, ausgeführt. Der Gummituchzylinder 2, 2' weist somit eine lageveränderbare Zylinderachse 9, 9' auf.

Der Platten-/Formzylinder 1 ist mit einem Einzelantrieb 7 gekoppelt eigenmotorisch antreibbar. Der Gummituchzylinder 2 ist vom Einzelantrieb 7 mechanisch getrennt antreibbar, indem dieser mittels Hauptantrieb10 in den Räderzug des Antriebsstrangs integriert und antreibbar ist. Hierzu ist am Gummituchzylinder 2 ein Antriebsrad angeordnet auf das vom Hauptantrieb 10 über den Druckzylinder 4 ein Eintrieb einspeisbar ist. Bei Ausbildung von mehreren Offsetdruckwerken kann jeder Platten-/Formzylinder 1 mit je einem Einzelantrieb 7 antriebsseitig gekoppelt sein, hingegen ist jeder Gummituchzylinder 2 mittels Hauptantrieb 10 und Räderzug antreibbar. Jeder Einzelantrieb 7 sowie der Hauptantrieb 10 sind schaltungs- und datentechnisch mit einer Maschinensteuerung 8 gekoppelt.

Zumindest einem der antreibbaren Zylinder 1 und/oder 2 ist eine Drehwinkelmesseinrichtung 20 zugeordnet. Jede Drehwinkelmesseinrichtung 20 umfasst eine zumindest an einem Zylinder 1; 2 fixiert angeordnete Maßverkörperung 12. Bevorzugt ist an dem Zylinder 1 und/oder 2 ein die Maßverkörperung 12 tragender Messring 11 fixiert angeordnet. Der Maßverkörperung 12 ist eine die Drehwinkellage induktiv erfassende Abtasteinrichtung 13 berührungslos zugeordnet. Zwischen der Abtasteinrichtung 13 und der bevorzugt auf dem Messring 11 angeordneten Maßverkörperung 12 ist ein Spalt 14 vorgesehen. Die Abtasteinrichtung 13 ist schaltungs- und datentechnisch mit der Maschinensteuerung 8 gekoppelt.

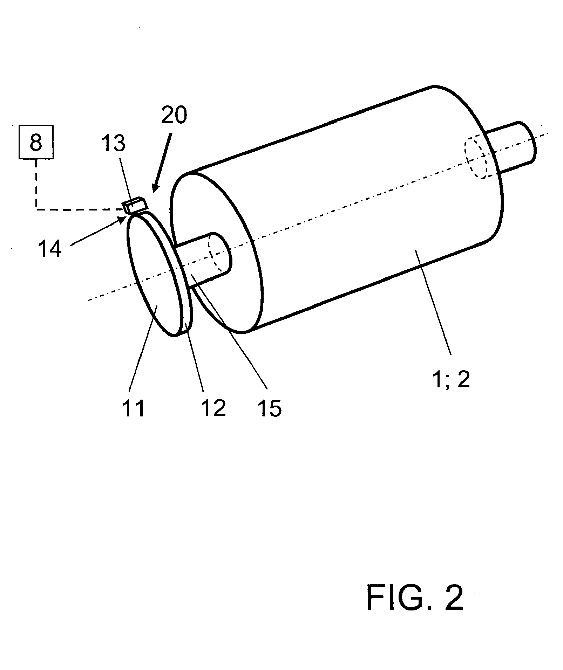

In der Ausbildung gem. Fig. 2 ist der Messring 11 auf einem Zapfen 15 des Zylinders 1 und/oder 2 fixiert angeordnet. Alternativ kann der Messring 11 an einer der Zylinderschultern oder der Mantelfläche des Zylinders 1 und/oder 2 angeordnet sein.

Bevorzugt ist die Maßverkörperung 12 umfangsseitig am Messring 11 angeordnet und die zugeordnete Abtasteinrichtung 13 ist radial zur Maßverkörperung 12, einen Spalt 14 bildend, angeordnet. Dabei weist die Abtasteinrichtung 13 eine radial zur Maßverkörperung 12 angeordnete Sensorik 18 auf. Der Krümmungsverlauf der Sensorik 18 zur am Umfang des Messrings 11 angeordneten Maßverkörperung 12 ist bevorzugt im Wesentlichen konstant.

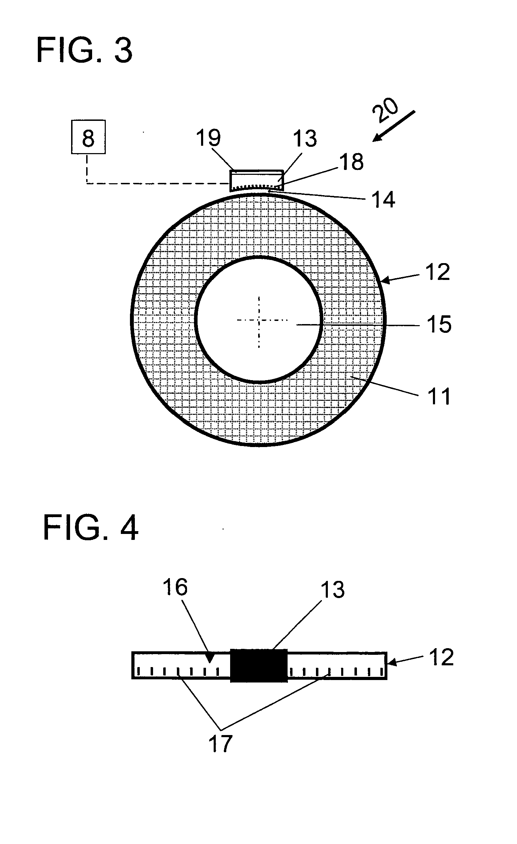

Die Sensorik 18 ist vorzugsweise durch mehrere in Umfangsrichtung auf einer Krümmungsbahn angeordnete Sensoren gebildet. Gem. Fig. 3 umfasst die Abtasteinrichtung 13 ferner eine mit der Sensorik 18 schaltungs- und datentechnisch gekoppelte Auswerteelektronik 19. Alternativ kann diese Auswerteelektronik 19 in die Maschinensteuerung 8 integriert sein.
Die Maßverkörperung 12 umfasst vorzugsweise eine Referenzspur 16 und eine benachbart angeordnete Messspur 17 (Fig. 4).

In einer bevorzugten Ausbildung weisen beide Zylinder 1; 2, der Platten-/Formzylinder 1 und der Gummituchzylinder 2, je eine vorzugsweise auf einem Messring 11 fixiert angeordnete Maßverkörperung 12 auf und jeder Maßverkörperung 12 ist je eine die Drehwinkellage des Zylinders 1, 2 induktiv erfassende Abtasteinrichtung 13 berührungslos zugeordnet.

In einer ersten Ausbildung kann der zweite, eine Maßverkörperung 12 tragende Zylinder 2 mit einer unveränderbaren Achsposition ausgeführt sein. Die zugeordnete Abtasteinrichtung 13 ist dabei ortsfest, vorzugsweise am Maschinengestell, angeordnet. Der Spalt 14 ist hierbei stets konstant.

In einer weiteren Ausbildung kann der zweite, eine Maßverkörperung 12 tragende Zylinder 2 mit einer lageveränderbaren Achsposition ausgeführt sein. Die zugeordnete Abtasteinrichtung 13 ist dabei ortsfest, vorzugsweise am Maschinengestell, angeordnet. Die Größe des Spalts 14 ist bei einer veränderbaren Achsposition ebenso veränderbar.

Bevorzugt ist die ortsfeste Abtasteinrichtung 13, speziell deren Sensorik 18, zum zweiten Zylinder 2 (mit lageveränderbarer Achsposition) derart angeordnet, dass die Mitte der Sensorik 18 zur Mitte eines Bereiches der lageveränderbaren Achsposition des zweiten Zylinders 2, beispielsweise zur Mitte des Schwenkbereiches des zweiten Zylinders 2, fluchtend angeordnet ist.

Bei dieser Ausbildung ist die veränderbare Größe des Spalts 14 relativ gering, so dass die ortsfeste Abtasteinrichtung 13 prozessstabil die Drehwinkellage erfassen kann.

In einer weiteren Ausbildung kann der zweite, eine Maßverkörperung 12 tragende Zylinder 2 eine veränderbare Achsposition aufweisen und die Abtasteinrichtung 13 ist der Verlagerungsbewegung des Zylinders 2 folgend nachführbar angeordnet. Bevorzugt ist dabei die Abtasteinrichtung 13 an einer Exzenterlagerung angeordnet. Dabei ist der Spalt 14 stets konstant.

Bevorzugt ist der zweite Zylinder 2 mit lageveränderbarer Achsposition der mittels Hauptantrieb 10 und Räderzug antreibbare Gummituchzylinder 2 und der erste Zylinder 1 mit unveränderbarer Achsposition ist der mit einem Einzelantrieb 7 gekoppelte Platten-/Formzylinder 1.

Das Arbeitsverfahren ist wie folgt: Zur Drehwinkelerfassung wird von zumindest einem, eine Maßverkörperung 12 tragenden Zylinder 1 oder 2 die Drehwinkellage berührungslos auf induktivem Wege mittels Abtasteinrichtung 13 abgetastet. Danach werden die Signale der Maschinensteuerung 8 übermittelt, ein Soll-Ist-Vergleich durchgeführt und ein Ansteuersignal von der Maschinensteuerung 8 dem Antrieb 7 oder 10, Einzelantrieb 7 oder Hauptantrieb 10, des zumindest einen zu beeinflussenden Zylinders 1 oder 2 zugeführt.
In einer Weiterbildung wird von beiden, je eine Maßverkörperung 12 tragenden Zylindern 1, 2 die Drehwinkellage jedes Zylinders 1, 2 berührungslos auf induktivem Wege abgetastet, die Signale der Maschinensteuerung 8 übermittelt, ein Soll -Ist-Vergleich durchgeführt und ein Ansteuersignal von der Maschinesteuerung 8 dem Antrieb 7 oder 10, Einzelantrieb 7 oder Hauptantrieb 10, des zumindest einen zu beeinflussenden Zylinders 1 oder 2 zugeführt.

### Bezugszeichenliste

- 1: Platten-/Formzylinder
- 2: Gummituchzylinder
- 3: Förderrichtung
- 4: Druckzylinder (Bogenführungszylinder)
- 5: Feuchtwerk
- 6: Farbwerk
- 7: Einzelantrieb
- 8: Maschinensteuerung
- 9: lageveränderbare Zylinderachse
- 10: Hauptantrieb
- 11: Messring
- 12: Maßverkörperung
- 13: Abtasteinrichtung
- 14: Spalt
- 15: Zapfen
- 16: Referenzspur
- 17: Messspur
- 18: Sensorik
- 19: Auswerteelektronik
- 20: Drehwinkelmesseinrichtung

## Patentansprüche

1. Verfahren zur Drehwinkelerfassung eines antreibbaren Zylinders in einer Verarbeitungsmaschine, wobei eine Drehwinkelmesseinrichtung schaltungstechnisch mit einer Maschinensteuerung gekoppelt ist, vermittels deren Signale der Winkellauf des ersten angetriebenen Zylinders zu einem benachbarten, getrennt angetriebenen zweiten Zylinder gesteuert wird,
**dadurch gekennzeichnet,**
**dass** von zumindest einem, eine Maßverkörperung tragenden Zylinder die Drehwinkellage berührungslos auf induktivem Wege abgetastet wird, die Signale der Maschinensteuerung übermittelt werden, ein Soll-Ist-Wert-Vergleich durchgeführt und ein Ansteuersignal von der Maschinensteuerung dem Antrieb des zumindest einen zu beeinflussenden Zylinders zugeführt wird.

2. Anordnung einer Drehwinkelmesseinrichtung für einen antreibbaren Zylinder in einer Verarbeitungsmaschine, wobei die Drehwinkelmesseinrichtung schaltungstechnisch mit einer Maschinensteuerung gekoppelt ist, vermittels deren Signale der Winkellauf des ersten antreibbaren Zylinders zu einem benachbarten, getrennt antreibbaren zweiten Zylinder steuerbar ist,
**dadurch gekennzeichnet,**
**dass** zumindest ein Zylinder (1; 2) eine daran fixiert angeordnete Maßverkörperung (12) umfasst und
**dass** der Maßverkörperung (12) eine die Drehwinkellage induktiv erfassende Abtasteinrichtung (13) berührungslos zugeordnet ist.

3. Anordnung nach Anspruch 1,
**dadurch gekennzeichnet,**
**dass** an dem Zylinder (1; 2) ein die Maßverkörperung (12) tragender Messring (11) fixiert angeordnet ist.

4. Anordnung nach Anspruch 1 und 3,
**dadurch gekennzeichnet,**
**dass** die Maßverkörperung (12) umfangsseitig am Messring (11) angeordnet ist und die Abtasteinrichtung (13) radial zur Maßverkörperung (12), einen Spalt (14) bildend, angeordnet ist.

5. Anordnung nach Anspruch 4,
**dadurch gekennzeichnet,**
**dass** die Abtasteinrichtung (13) eine radial zur Maßverkörperung (12) angeordnete Sensorik (18) aufweist.

6. Anordnung nach wenigstens Anspruch 1,
**dadurch gekennzeichnet,**
**dass** beide Zylinder (1; 2) je eine fixiert angeordnete Maßverkörperung (12) aufweisen und jeder Maßverkörperung (12) eine die Drehwinkellage induktiv erfassende Abtasteinrichtung (13) berührungslos zugeordnet ist.

7. Anordnung nach wenigstens Anspruch 1,
**dadurch gekennzeichnet,**
**dass** der zweite, eine Maßverkörperung (12) tragende Zylinder (2) eine veränderbare Achsposition aufweist und die Abtasteinrichtung (13) ortsfest angeordnet ist.

8. Anordnung nach wenigstens Anspruch 1,
**dadurch gekennzeichnet,**
**dass** der zweite, eine Maßverkörperung (12) tragende Zylinder (2) eine veränderbare Achsposition aufweist und die Abtasteinrichtung (13) der Verlagerungsbewegung des Zylinders (2) folgend nachführbar angeordnet ist.

9. Anordnung nach wenigstens Anspruch 1,
**dadurch gekennzeichnet,**
**dass** der zweite Zylinder (2) mit lageveränderbarer Achsposition ein mittels Hauptantrieb (10) und Räderzug antreibbarer Gummituchzylinder (2) ist und der erste Zylinder (1) mit unveränderbarer Achsposition ein mit einem Einzelantrieb (7) gekoppelter Platten-/Formzylinder (1) ist.

10. Anordnung nach wenigstens Anspruch 1 und 7,
**dadurch gekennzeichnet,**
**dass** die ortsfeste Abtasteinrichtung (13) eine Sensorik (18) umfasst, deren Mitte zur Mitte eines Bereiches der lageveränderbaren Achsposition des zweiten Zylinders (2) fluchtend angeordnet ist.
